Europäisches Patentamt

**European Patent Office**

**Office européen des brevets**

(19)

(11) Veröffentlichungsnummer : **0 059 963**
**B1**

(12)

# EUROPÄISCHE PATENTSCHRIFT

(45) Veröffentlichungstag der Patentschrift :
28.05.86

(21) Anmeldenummer : 82101773.8

(22) Anmeldetag : 06.03.82

(51) Int. Cl.⁴ : **B 60 N   1/06**

(54) **Trägheitsverriegelung für die Rückenlehne eines Fahrzeugsitzes.**

(30) Priorität : 09.03.81 US 241734

(43) Veröffentlichungstag der Anmeldung :
15.09.82 Patentblatt 82/37

(45) Bekanntmachung des Hinweises auf die Patenterteilung : 28.05.86 Patentblatt 86/22

(84) Benannte Vertragsstaaten :
DE

(56) Entgegenhaltungen :
DE-A- 1 680 262
DE-A- 2 708 461
DE-A- 2 747 584
DE-A- 2 829 447
DE-A- 2 937 117
DE-A- 2 938 604
DE-A- 2 939 729
DE-B- 2 264 509
DE-B- 2 404 598
DE-B- 2 655 535
US-A- 3 549 202

(73) Patentinhaber : KEIPER RECARO GmbH & Co.
Büchelstrasse 54-58 Postfach 14 03 80
D-5630 Remscheid 14 (DE)

(72) Erfinder : Klüting, Bernd, Ing. grad.
Jung-Stilling-Weg 18
D-5608 Radevormwald (DE)
Erfinder : Zaveri, Vikram Hiralal
4231-2C W. Dickman Road
Springfield Michigan 49015 (US)

(74) Vertreter : Buse, Karl Georg, Dipl.-Phys. et al
Patentanwälte Dipl.-Phys. Buse Dipl.-Phys. Mentzel
Dipl.-Ing. Ludewig Unterdörnen 114 Postfach 20 02 10
D-5600 Wuppertal 2 (DE)

**Beschreibung**

Die Erfindung betrifft eine Trägheitssperreinrichtung für die Rückenlehnenverstellung von Fahrzeugsitzen, wobei ein dem Sitzteil zugeordneter Gelenkteil und ein der Rückenlehne zugeordneter Gelenkteil über eine Schwenkachse miteinander verbunden sind und einem Gelenkteil ein Anschlag zugeordnet ist, an dem ein die Gelenkteile bei starken Verzögerungskräften gegeneinander festlegendes, durch Trägheitskräfte beaufschlagtes Sperrglied in Anlage bringbar ist.

Bei einer beispielsweise aus der DE-A-29 38 604 bekannten Sperreinrichtung der eingangs genannten Art sind durch Trägheit betätigte Verriegelungselemente an einem mit der nach vorn kippbaren Rückenlehne eines Sitzes verbundenen Gelenkhebel drehbar gelagert, um an einem Verriegelungsanschlag anzugreifen, der an einem festem bzw. verstellbaren Element des Gelenkes zur Rückenlehnenverstellung angebracht ist, welches verschiedene Winkeleinstellungen des Verriegelungsanschläges für entsprechende Neigungslagen der Rückenlehne ermöglicht.

Bei einer solchen Sperreinrichtung mit im Verriegelungsfall ausreichender Festgkeit, um maximalen Passagierbelastungen der Rückenlehne im Crashfall zu widerstehen, erfordert der gegebene Mindestschwenkweg zwischen Eingriffs- und Entriegelungsstellung, wie auch der sich für die gewünschte Neigungslageneinstellung der Rückenlehne für den Sperreineingriff dienende Weg, ein bestimmtes Eigengewicht des Trägheitssperrhebels, um die optimal mögliche Zuverlässigkeit zu erzielen, die bei diesem bekannten Trägheitsverriegelungssystem möglich sein kann. Die auftretenden Grenzlagen der Fahrzeugneigung, beispielsweise beim Parken am Berg, wobei eine durch Schwerkrafteinwirkung ausnutzbare Entriegelung wünschenswert ist, oder bei Fahrbedingungen, bei welchen eine durch Trägheit betätigte Notverriegelung des Mechanismus gewünscht wird, erfordern einen Bereich von Parametern, die nicht mit der bekannten einfachen, einteiligen Trägheitsverriegelung zu lösen sind, bei welcher der Winkellagenbereich des Trägheitshebelschwerpunktes gegenüber seinem Drehmittelpunkt einen wirksamen Hebel für jedes der aud Schwerkraft und Trägheit ansprechenden, einander entgegengesetzten Momente bildet.

Die Aufgabe der vorliegenden Erfindung besteht darin, eine Trägheitssperreinrichtung der vorgenannten Art dahingehend zu verbessern, daß einerseits die Möglichkeit einer einwandfreien Rückenlehnenvorschwenkung im Bedarfsfall und andererseits bei plötzlich auftretenden Beschleunigungs- oder Verzögerungskräften die Möglichkeit der selbsttätigen Sperrung beibehalten wird, während die Sperreinrichtung darüber hinaus mehrteilig ausgebildet sein soll, um mit geringen Bauteilgewichten bzw. Bauteilmassen über den vollen Bereich der Rückenlehnenverstellung und der geländebedingten Neigungslage des Fahrzeuges wirksam zu bleiben.

Diese Aufgabe ist erfindungsgemäß dadurch gelöst, daß das Sperrglied mit einem separaten Gewichtskörper gekuppelt ist, dessen das Sperrglied im Lösesinne beaufschlagende Schwergewichtskraft durch eine verzögerungsbedingte Trägheitskraft zur Erzielung einer Verriegelungslage des Sperrgliedes aufhebbar ist. Bei einer, derartige Merkmale aufweisenden Trägheitssperreinrichtung ist der bei stehendem Fahrzeug zur Entriegelung verwendete, auf Scherkraft ansprechende Gewichtskörper wesentlich leichter als bisher bekannte Sperrhebel. Das infolge der auf den Gewichtskörper einwirkenden Schwerkraft resultierende Entriegelungsmoment wird verringert oder ausgeschaltet, wenn ein bestimmter Bremswert des Fahrzeuges erzielt wird, so daß infolge der dann wirkenden Trägheitskräfte ein solches Verriegelungsmoment vorhanden ist, daß das Sperrglied die Gelenkteile gegeneinander festlegt. Durch die Verwendung eines gegenüber dem Sperrglied separaten. Gewichtskörpers lassen sich Anordnungen treffen, welche die Verriegelungsneigung gegenüber bekannten Sperreinrichtungen verbessern, bei denen das gesamte Entriegelungsmoment durch das auf Bremsung ansprechende Trägheitsmoment ausgeglichen werden muß, um eine mögliche Entriegelung während des Bremsens zu verhindern. Bei der erfindungsgemäßen Lösung, bei welcher eine Aufteilung zwischen dem Sperrglied und dem Gewichtskörper vorgenommt wurde, führt jedoch bereits ein geringes, aus Trägheitskräften resultierendes Moment zu einer Verlagerung des Gewichtskörpers und somit zu einer Bewegung des Sperrgliedes im Sperrsinn.

Der Erfindungsgedanke ist bei mehreren Ausführungsbeiformen verwirklicht, wovon eine Ausführungsform dadurch gebildet wird, daß das Sperrglied und der Gewichtskörper mit einem drehbar gelagerten Knebelgelenk verbunden sind, mit welchem das Schwerkraftmoment durch das aus der Fahrzeugbremsung resultierende Trägheitsmoment neutralisierbar ist. Dabei ist das Sperrglied vorteilhaft als Querzapfen ausgebildet, der mit einem Ende des Knebelgelenkes verbunden ist, wobei der Querzapfen in senkrechten Schlitzen in Seitenplatten eines Gelenkteiles geführt ist, wobei die Schlitze derart angeordnet sind, daß die eine Endlage des darin geführten Querzapfens die Sperrung und die andere Endlage des Querzapfens in diesen Schlitzen die Freigabelage darstellt. Dabei sind der Querzapfen und der Gewichtskörper vorteilhaft innerhalb der in Abstand angeordneten Seitenplatten des Gelenkteiles angebracht, wobei sich der Querzapfen am oberen Ende der Schlitze in der Verriegelungslage befindet.

Bei einer weiteren Ausführungsform des Erfindungsgegenstandes ist der als Sperrglied fungierende Querzapfen in Schlitzen im der Rückenlehne zugeordneten Gelenkteil geführt, wobei der Querzapfen in eine Ausnehmung einer zur Rückenlehnenverstellung einstellbare Sperrklinkenplatte eingreift, um ein Vorschwenken der Rückenlehne mittels eines Gewichtskörpers zu verhindern, wobei der Gewichtskörper auf einem am Gelenkteil der Rückenlehne befestigten und in eine rückwärtige Richtung abwärts geneigten Halter gelagert und mit dem Querzapfen über ein Zugglied verbunden ist. Um bei dieser Lösung den Querzapfen in Gebrauchslage der Rückenlehne in seiner Sperrbereitschaftslage zu halten, ist am der Rückenlehne zugehörigen Gelenkteil ein Hebel gelagert, der einerseits den Querzapfen und andererseits eine Steuerfläche der Ausnehmung in der Sperrklinkenplatte zur Überführung des Querzapfens in die Verriegelungslage nach Maßgabe der Bewegung der Rückenlehne in ihre Gebrauchslage beaufschlagt. Bei einer anderen Ausführungsform einer Trägheitssperreinrichtung ist das Sperrglied als am Gelenkteil der Rückenlehne drehbar gelagerter Anschlagnocken ausgebildet und mit einer Nockenverlängerung oberhalb seines Lagerpunktes an einem als Rolle ausgebildeten Gewichtskörper zur Anlage gebracht, der auf einer am Gelenkteil der Rückenlehne befestigten, nach unten geneigten Stütze abrollbar und in Schlitzen geführt angeordnet ist. Bei einer modifizierten Ausführungsform der letztgenannten Art ist die Verlängerung gehäuse zur Aufnahme eines in der Kappe drehbar herabhängenden Pendelgewichtes ausgebildet, wobei der Schwerpunkt des Pendelgewichtes so angeordnet ist, daß eine Öffnungskraft zur Entriegelung des Sperrgliedes bei stehendem Fahrzeug ausgeübt wird, während bei Fahrzeugbremsung der Gewichtskörper in eine die Verriegelung des Sperrgliedes bewirkende Richtung schwingt. Dabei mag zur Erhöhung des aus Trägheitskräften resultierenden Momentes die Drehlagerstelle des Pendelgewichtes als geneigter Schlitz ausgebildet sein.

Außer einem festen Gewichtskörper wird nach einem weiteren Ausgestaltungsmerkmal der Erfindung vorgeschlagen, das am Gelenkteil der Rückenlehne drehbar gelagerte Sperrglied mit einem Hohlraum zu versehen, der teilweise mit Flüssigkeit gefüllt ist, wobei der Schwerpunkt der Flüssigkeit bei stehendem Fahrzeug das Sperrglied in Entriegelungsstellung vorspannt, während der Hohlraum so gestaltet ist, daß eine Verlagerung des Flüssigkeitsschwerpunktes bei Fahrzeugbremsung zur Erzeugung eines Sperrmomentes genutzt wird.

Die Erfindung ist in Ausführungsbeispielen in den Zeichnungen dargestellt und wird nachfolgend näher erläutert. Es zeigen :

Figur 1 ein Gelenk einer Rückenlehne im Seitenaufriß, welches ein erstes Ausführungsbeispiel der erfindungsgemäßen Trägheitsverriegelung verkörpert.

Figur 1A eine bruchstückartige Schnittansicht auf Linie 1A-1A von Fig. 1.

Figur 1B eine bruchstückartige Schnittansicht auf Linie 1B-1B von Fig. 1.

Figur 2 ein zweites Ausführungsbeispiel der erfindungsgemäßen Trägheitsverriegelung in bruchstückartigem Seitenaufriß.

Figur 3 ein drittes Ausführungsbeispiel der vorliegenden Erfindung mit einer Winkeleinstellung für eine verstellbare Rücklehne im Seitenaufriß.

Figur 4 ein viertes Ausführungsbeispiel einer zweiteiligen Trägheitsverriegelung in bruchstückartigem Seitenaufriß.

Figur 4A ein viertes Ausführungsbeispiel einer zweiteiligen Trägheitsverriegelung in bruchstückartigem Seitenaufriß ; und

Figur 5 ein fünftes Ausführungsbeispiel unter Verwendung eines verschiebbaren, auf Schwerkraft und Trägheit ansprechenden Flüssigkeitselementes in bruchstückartigem Seitenaufriß.

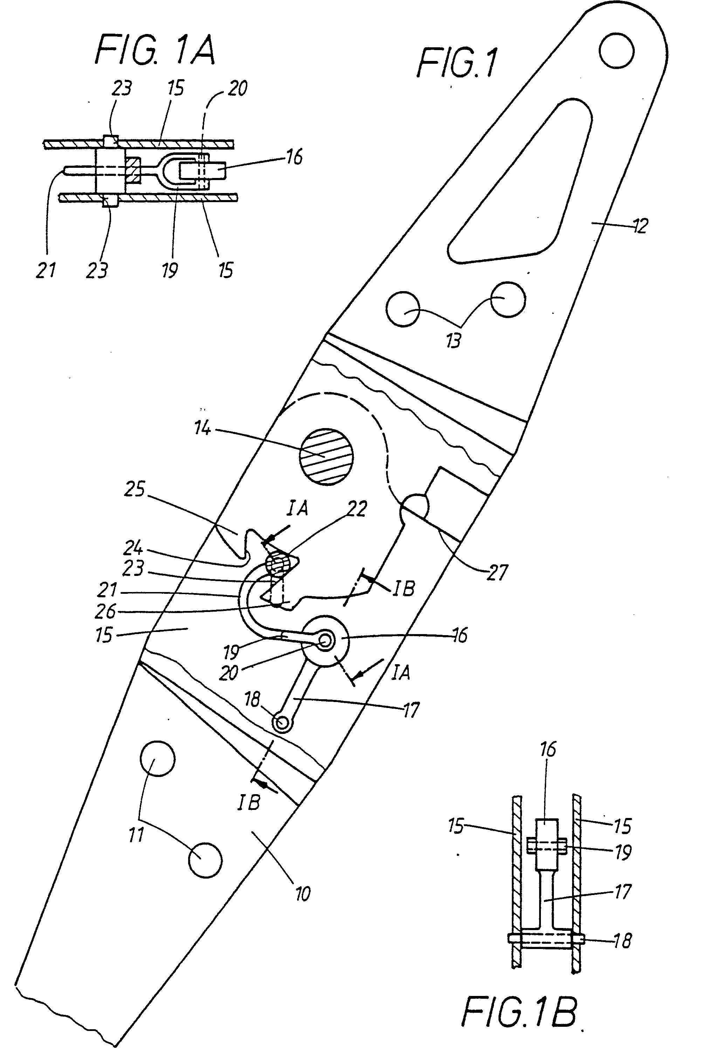

In Fig. 1 weist ein, ein erstes Ausführungsbeispiel der erfindungsgemäßen Trägheitsverriegelung verkörperndes Gelenk einer Rückenlehne einen aus zwei Platten in Sandwich-Bauweise bestehenden unteren Gelenkträger 10 auf, der mit Befestigungslöchern 11 zur Anbringung am unteren Sitzrahmen versehen ist, und einen oberen, aus nur einer Platte bestehenden Träger 12 mit Befestigungslöchern 13, die zur Befestigung an einer nach vorn kippbaren Rückenlehne vorgesehen sind, und der bei 14 zwischen den beiden in Abstand angeordneten Schichtplatten 15 des unteren Trägers 10 angeordneten Schichtplatten 15 des unteren Trägers 10 angelenkt ist, von denen eine weggbrochen ist, um die dazwischen angeordneten inneren Trägheits-Verriegelungselemente deutlich zeigen zu können, welche ein Pendelgewicht 16 aufweisen, das an einem Kunststoffarm 17 befestigt ist, der bei 18 an Seitenplatten 15 drehbar befestigt ist, wobei ein Kunststoffjoch 19 bei 20 an dem Pendelgewicht 16 drehbar gelagert ist und eine gebogene Verlängerung 21 aufweist, die mit dem Querzapfen 22 verbunden ist, der durch Schlitze 23 in den Seitenplatten 15 verläuft und mit einer Einkerbung 24 in der Verlängerung 25 des oberen Sitzträgers 12 in Eingriff gelangt. Der Querzapfen 22 ist normalerweise auch in Eingriff mit einem Vorsprung 26 in der unteren Verlängerung des Trägers 12, wenn sich die Rückenlehne in Normalstellung befindet, die von einem hinteren Anschlag 27 bestimmt wird, der durch ineinandergreifende Vorsprünge der oberen und unteren Gelenkträger gebildet wird.

Bei stehendem Fahrzeug bewirkt ein anfängliches Vorwärtskippen der Rückenlehne um den Drehzapfen 14 ein Zurückziehen des Vorsprungs 26, so daß das Pendelgewicht 16, das durch das Kunststoffglied 21 wirkt, den Querzapfen 22 im Schlitz 23 in eine Außereingriffsstellung zu dem Verriegelungsvorsprung 25 senken kann und dadurch ein Kippen der Rückenlehne in eine vordere Endstellung ermöglicht. Wenn die Rückenlehne aus ihrer vorderen Kippstellung in Eingriff mit dem hinteren Anschlag 27 zurückkehrt, greift die vordere Steuerfläche des Vorsprunges 26 am Querzapfen 22 in seiner untersten Stellung im Schlitz 23 ein und hebt ihn auf die gezeigte Höhe des Verriegelungseingriffs.

Unter Bremsbedingungen bewirkt die auf das Pendelgewicht 16 wirkende Trägheit den Verlust seines durch Schwerkraft betätigten wirksamen Momentes, wobei die Resultierende von Schwerkraft und Bremsträgheit durch den Drehzapfen 18 verläuft und jegliche zusätzliche Bremsung eine Knebelwirkung durch die Glieder 17 und 21 hervorruft, welche den Querzapfen 22 in seiner angehobenen Stellung hält.

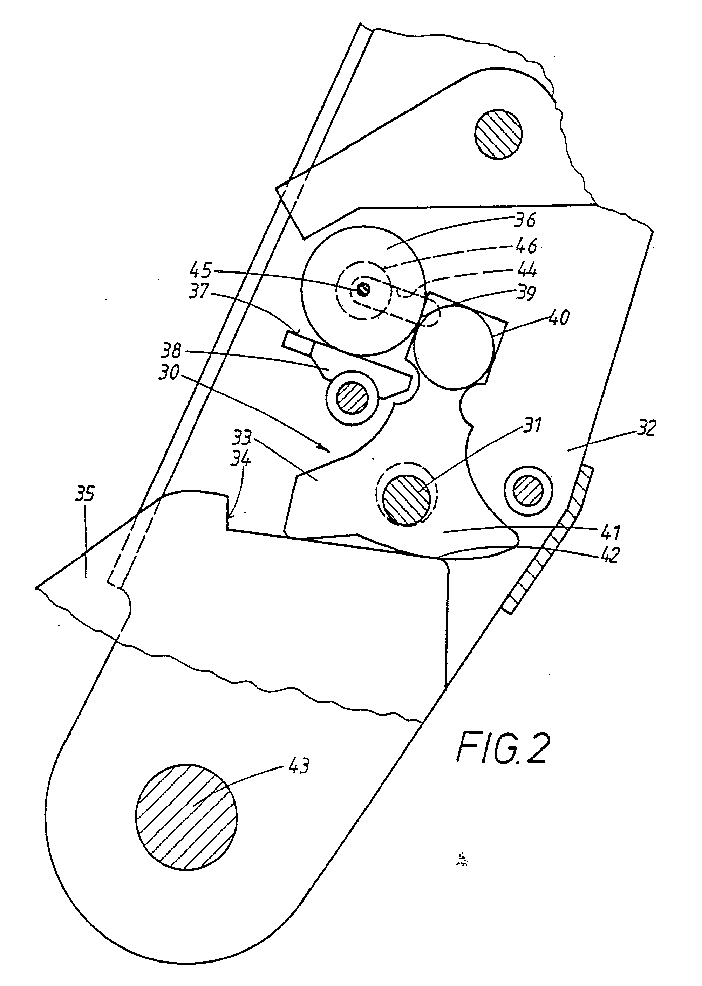

In Fig. 2 weist die Verriegelung einen Anschlagnocken 30 auf, der bei 31 am Träger der Rückenlehne 32 drehbar gelagert ist und eine vordere Nase 33 aufweist, die mit einer Einkerbung 34 in einem festen oder winkelförmig einstellbaren, an der Rückenlehne angebrachten Element 35 bei Vorwärtskippen der Rückenlehne unter Not-Bremsbedingungen eingreifen kann, wie nachstehend noch beschrieben wird.

Bei stehendem Fahrzeug bewirkt ein Rollengewicht aus Metall 36, das auf einer Rampenfläche 37 einer am Sitzträger 32 befestigten Kunststoffstütze 38 aufliegt, ein von der durch Schwerkraft vorgespannten Rolle ausgeübtes Entriegelungsmoment durch den Kontakt 39 mit der Anschlagnockenverlängerung 40. Der beispielsweise in der Größenordnung von 17 1/2° vorgesehene Winkel der Rampenfläche 37 ist bei den am wenigsten günstigen Öffnungsanforderungen ausreichend, um die Entriegelungsanlenkung des Anschlagnockens bei anfänglichem Vorwärtskippen der Rückenlehne zu bewirken, wodurch eine Trennung der Anschlagfläche 41 des Anschlagnockens 30 von der Anschlagfläche 42 auf dem unteren Trägerelement 35 bewirkt wird, welches zusätzlich zu seiner Funktion als hinterer Anschlag für die Rückenlehne dazu dient, den Anschlagnocken 30 in seinem Verriegelungseingriff gegen die Öffnungsspannung der Rolle 36 zu halten, wie hier gezeigt ist.

In diesem Fall ist der obere Träger 32 in einer aus zwei Platten bestehenden Sandwich-Bauweise ausgebildet, welche die vorstehend beschriebenen Verriegelungselemente enthält und bei 43 an einem aus einer einzelnen Platte bestehenden, am unteren Träger befestigten Element 35 angelenkt ist, welches eine verstellbare Ratschenplatte für eine verstellbare Rückenlehne, wie sie in der Technik bekannt ist, sein kann, oder mit dem, oder einem Teil des unteren Sitzträgers starr verbunden sein kann. Ein Paar Schlitze 44 in den oberen Trägerplatten begrenzen den Weg der mit einem vorstehenden Zapfen 45 versehenen Rolle 36, und ein Paar reibungsarme Kunststoff-Unterlegscheiben 46 dienen als Seitenführungen für die Rolle 36 und gewährleisten freien Lauf auf der Rampenfläche 37.

Es versteht sich, daß bei Fahrzeugbremsung die Vorspannlast der Rolle 36 auf die Verlängerung 40 des Anschlagnockens im Gegenuhrzeigersinn verschwindet, wenn die Bremsträgheit die Vorspannung abgleicht, die aus der auf die Rolle wirkenden 17 1/2° Schwerkraftkomponente resultiert. Ebenso ist ersichtlich, daß der Schwerpunkt des Rollengewichtes 36 vor dem Drehzapfen 31 liegen kann und dennoch ein Moment im Gegenuhrzeigersinn durch Reaktion und die senkrechte Komponente der Rampenfläche 37 ausübt, welche ihrerseits die gesamte auf die Rolle 36 wirkende Schwerkraft aufnimmt, sobald die Bremsträgheit der Rampenwinkelkomponente der Schwerkraft gleich ist.

Bei dieser Anordnung ist ein verläßlicherer Schwerkraft-Entriegelungsvorgang möglich als dort, wo, wie bei vorbekannten Trägheitsverriegelungen herkömmlich ist, der Schwerpunkt des Anschlagnockens an sich, wie dargestellt ist, allein für die Erzeugung eines Entriegelungsmomentes verantwortlich ist, da ein verhältnismäßig kurzer horizontaler Hebel eine solche Einheit gegenüber Rückenlehneneinstellung und Fahrzeugneigung in Parkstellung empfindlicher macht. Darüber hinaus ermöglicht die Anordnung bei dem Ausführungsbeispiel von Fig. 2, daß das effektive Gewicht an einem längeren Hebel wirkt als es möglich ist, wenn man sich allein auf den Schwerpunkt des Anschlagnockens an sich verläßt.

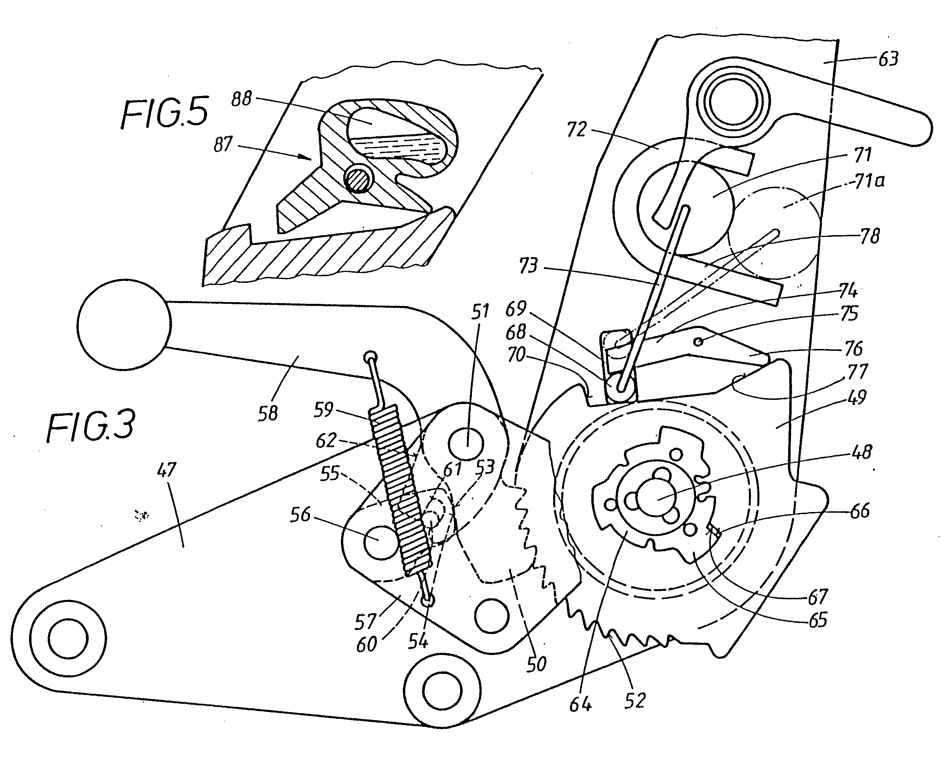

Bei dem Ausführungsbeispiel von Fig. 3, welches eine verstellbare Rückenlehne aufweist, ist auf dem unteren Sitzträger 47 bei 48 eine verstellbare Sperrklinkenplatte 49 drehbar gelagert, an der in eingestellter Lage Zähne der Sperrklinkenverlängerung 50 eingreifen, die bei 51 an dem Träger 47 drehbar gelagert ist, wobei Schaltzähne 52 durch Eingriff der Steuerfläche 53 des bei 56 drehbar am unteren Träger 47 zwischen den Seitenplatten 57 angeordneten Nockengliedes 55 mit der hinteren Fläche 54 der Sperrklinkenverlängerung 50 in Verriegelungsstellung gehalten werden. Der Nocken wird beim Zurückziehen des Handgriffes 58 gegen die Spannung der Feder 59 durch Eingriff des Querzapfens 60 mit dem in der Verlängerung 62 des Auslösegriffes ausgebildeten Schlitzes 61 gelöst.

Eine von einer « V » Nut in der Taumel-Antriebswelle 48 gehaltene Federklammer 64 weist Vorsprünge 65 zum Eingriff mit einem nicht gezeigten Taumel-Handknopf auf, um eine feinere Einstellung der Lage der Rückenlehne zu erzielen als mit den Sperrzähnen 52 möglich ist, die zur schnellen Grobeinstellung bei Betätigung des Auslösegriffes 58 verwendet werden können. Der hintere Anschlagzapfen 66, der mit den Ausnehmungen 67 in den Seitenplatten des Trägers 63 in Eingriff ist, begrenzt die Rückkehr der Rückenlehne in eine beliebige eingestellte Lage im Anschluß an die Vorwärtsbewegung, die von der Trägheitsverriegelung gesteuert wird.

Hier weist die Trägheitsverriegelung den Querzapfen 68 auf, der in Schlitzen 69 in den Seitenplatten des Trägers 63 begrenzt und in der gezeigten Lage von einem bei 75 angelenkten Winkelhebel 74 durch Eingriff der Verlängerung 76 mit der in der Verriegelungsplatte 49 ausgebildeten Steuerfläche 77 bei Bewegung der Rückenlehne in ihre hintere Anschlagstellung gehalten wird ; der Querzapfen 68 gelangt in Eingriff mit der in der Sperrklinkenplatte 49 ausgebildeten Kerbe 70 bei plötzlicher Bremsung des Fahrzeuges, wodurch das Gewicht 71 durch die darauf wirkende Trägheit in der gezeigten vorderen Stellung im sich zwischen den Trägern 63 erstreckenden Halter 72 bleibt, und dadurch über das Glied 73 wirkt, um den Querzapfen 68 in der Eingriffshöhe im Schlitz 69 zu halten.

Wenn das Fahrzeug steht und die Rückenlehne nach vorn gekippt wird, gelangt die Verlängerung 76 des Winkelhebels außer Eingriff mit der Steuerfläche 77 und ermöglicht ein Anheben des Winkelhebels 74 durch den vom Glied 73 angehobenen Querzapfen 68 durch Abwärtsrollen des Gewichtes 71 auf der Rampenfläche 78 des Halters 72 in die gestrichelt gezeigte Stellung 71a.

Hier wie in dem Ausführungsbeispiel von Fig. 2 weist die Rampenfläche 78 einen Winkel auf, der geeignet ist, die Schwerkraftentriegelung zu gewährleisten bei stehendem Fahrzeug über den gesamten Bereich von Parametern für Sitzeinstellungen und Fahrzeugneigung, für welche die Entriegelung erforderlich ist, und schaft gleichzeitig Mittel, um die Komponente des Gewichtes 71 zur Schwerkraftentriegelung zu neutralisieren, wenn die Bremsträgheit der durch die Rampe 78 gebildeten wirksamen Schwerkraftkomponente gleich ist.

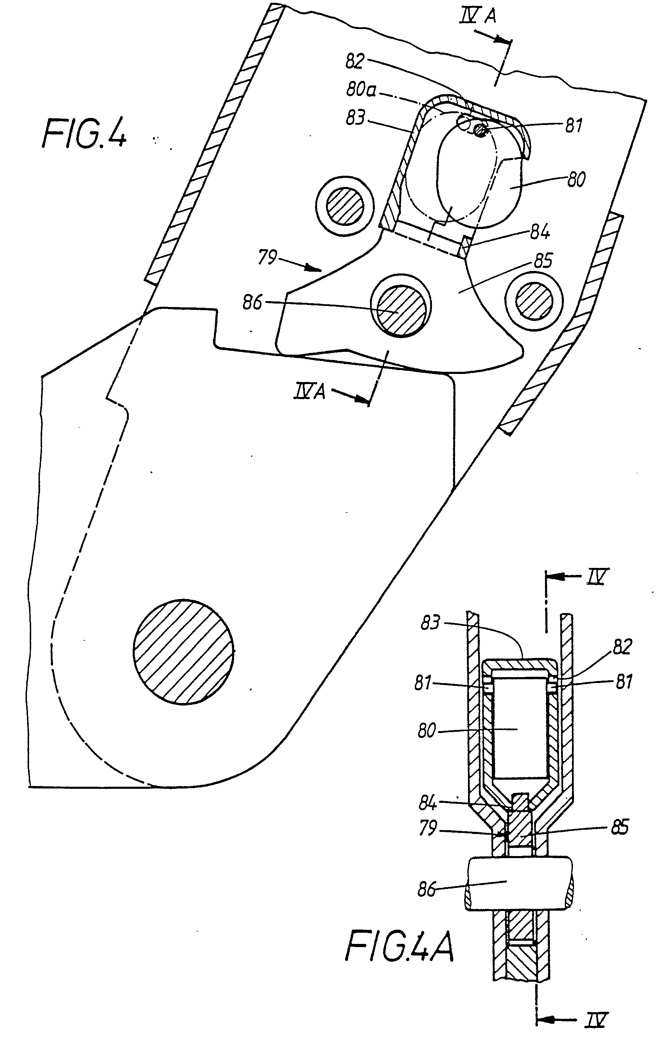

Bei dem Ausführungsbeispiel von Fig. 4 und 4A ist der in Konstruktion und Betrieb dem Ausführungsbeispiel von Fig. 2 allgemein ähnliche Anschlagnocken 79 mit einem Pendelgewicht 80 versehen, das bei 81 drehbar in Schlitzen 82 aufgehängt ist, die in einer bei 84 am Metallteil 85 des Anschlagnockens 79 befestigten Kunststoffkappe 83 ausgebildet sind.

Wie hier gezeigt, wird die ausgezogen gezeigte Stellung des Pendels 80 bei stehendem Fahrzeug aufrechterhalten durch Neigung des Schlitzes 82 bei ausreichendem durch Schwerkraft betätigten Hebel zur Entriegelung der Verriegelung bei Vorwärtskippen der Rückenlehne. Entsprechend einer vorgegebenen Bremsung des Fahrzeuges verschiebt sich das Pendel 80 in die gestrichelt gezeigte Stellung 80a, wobei das horizontale Schwerkraftmoment gegenüber dem Verriegelungsdrehzapfen 86 verringert und dadurch die Trägheitsverriegelung auf die Fahrzeugbremsung empfindlicher reagiert als mit einer einteiligen Trägheitsverriegelung des gleichen allgemeinen Aufbaus möglich wäre.

Das Ausführungsbeispiel von Fig. 5 verwendet schließlich einen Anschlagnocken 87 ähnlich dem Anschlagnocken 79 von Fig. 4, bei welchem ein abgedichteter Hohlraum geeigneter Ausführung teilweise mit Quecksilber oder einer anderen geeigneten Flüssigkeit gefüllt ist, die so einseitig wirkt, daß die Verriegelung beim Vorwärtskippen der Rückenlehne bei stehendem Fahrzeug außer Eingriff gelangt, und sich bei Fahrzeugbremsung verschiebt, um die Schwerkraftkomponente der Flüssigkeit zur Entriegelung zu verringern und die Verriegelung wieder empfindlicher zu machen für Bremsträgheit und dadurch die Eingriffsstellung der Verriegelung zu halten.

Wie schon erwähnt, alle siese Ausführungsbeispiele verringern oder eliminieren völlig sehr wirksam das schwerkraftbedingte Moment zur Entriegelung nach Maßgabe der Fahrzeugbremsung, um eine verläßlichere Entriegelung mit minimalem Schwerkraft/Trägheitsgewicht über den gesamten Bereich von Sitzeinstellungen und Fahrzeugneigungen zu fördern und gleichzeitig die Empfindlichkeit der Verriegelung gegenüber Fahrzeugbremsung zu vergrößern und dadurch wirksam den Verriegelungseingriff zu halten wiederum über den gesamten Bereich von Rückenlehnen-Einstellungen und Fahrzeugneigungen zu einem Zeitpunkt, wo eine Notbremsung eine Erhaltung des Verriegelungseingriffs erfordert, um die Rückenlehne gegen Vorwärtskippen zu verriegeln.

Bei den Ausführungsbeispielen von Fig. 2, 3, 4 und 5 ist ersichtlich, daß die Trägheit die Schwerkraft bei schnellem Vorwärtskippen des Sitzes ergänzt, wenn das Fahrzeug steht, um ein schnelles Bewegen des Verriegelungselementes in die Entriegelungsstellung zu unterstützen.

**Patentansprüche**

1. Trägheitssperreinrichtung für die Rückenlehnenverstellung von Fahrzeugsitzen, wobei ein dem Sitzteil zugeordneter Gelenkteil (10, 47) und ein der Rückenlehne zugeordneter Gelenkteil (12, 32, 36) über eine Schwenkachse (14, 43, 48) miteinander verbunden sind und einem Gelenkteil ein Anschlag (25, 34, 70) zugeordnet ist, an dem ein die Gelenkteile bei starken Verzögerungskräften gegeneinander festlegendes, durch Trägheitskräfte beaufschlagtes Sperrglied (22, 30, 68, 79, 87) in Anlage bringbar ist, dadurch gekennzeichnet, daß das Sperrglied (22, 30, 68, 79, 87) mit einem separaten Gewichtskörper (16, 36, 71, 80) gekuppelt ist, dessen das Sperrglied im Lösesinne beaufschlagende Schwergewichtskraft durch eine verzögedrungsbedingte Trägheitskraft zur Erzielung einer Verriegelungslage des Sperrgliedes aufhebbar ist.

2. Trägheitssperreinrichtung nach Anspruch 1, dadurch gekennzeichnet, daß Sperrglied (22) und Gewichtskörper (16) mit einem drehbar gelagerten Knebelgelenk (17, 21) verbunden sind, wobei das Knebelgelenk so ausgebildet ist, daß das Moment der Schwerkraftentriegelung durch das aus der Fahrzeugbremsung resultierende Trägheitsmoment neutralisierbar ist.

3. Trägheitssperreinrichtung nach Anspruch 2, dadurch gekennzeichnet, daß das Sperrglied als Querzapfen (22) ausgebildet ist, der mit einem Ende des Knebelgelenkes (17, 21) verbunden ist, wobei senkrechte Schlitze (23) in den in Abstand angeordneten Seitenplatten (15) eines Gelenkteiles (10) die Bewegung des Querzapfens (22) in Eingriffs- und Außereingriffstellung der Verriegelung führen, wobei eine Einkerbung (24) des anderen, zwischen den Seitenplatten (15) angeordneten Gelenkteiles (12) zum Eingriff mit dem Querzapfen vorgesehen ist, wenn der Querzapfen (22) sich am einen Ende der Schlitze (23) befindet, während der Querzapfen (22) freigegeben ist, wenn er sich am anderen Ende der Schlitze (23) befindet.

4. Trägheitssperreinrichtung nach Anspruch 3, dadurch gekennzeichnet, daß der Querzapfen (22) und der Gewichtskörper (16) innerhalb der in Abstand angeordneten Seitenplatten (15) des Gelenkteiles (10) angebracht sind und sich der Zapfen (22) am oberen Ende der Schlitze (23) in Verriegelungseingriffsstellung befindet.

5. Trägheitssperreinrichtung nach Anspruch 1, dadurch gekennzeichnet, daß das als Querzapfen (68) ausgebildete Sperrglied in Schlitzen (69) geführt ist, die im der Rückenlehne zugeordneten Gelenkteil (63) angeordnet sind, wobei der Querzapfen (68) in eine Ausnehmung (70) einer zur Rückenlehnenverstellung einstellbare Sperrklinkenplatte (49) eingreift, um ein Vorschwenken der Rückenlehne mittels eines Gewichtskörpers (71) zu verhindern, der auf einem am Gelenkteil (63) der Rückenlehne befestigten und in eine rückwärtige Richtung abwärts geneigten Halter (72) gelagert und mit dem Querzapfen (68) über ein Zugglied (73) verbunden ist, wobei am der Rückenlehne zugehörigen Gelenkteil (63) ein Hebel (74) gelagert ist, der einerseits den Querzapfen (68) und andererseits eine Steuerfläche (77) der Ausnehmung (70) in der Sperrklinkenplatte (49) zur Überführung des Querzapfens in die Verriegelungslage nach Maßgabe der Bewegung der Rückenlehne in ihre Gebrauchslage beaufschlagt.

6. Trägheitssperrhebel nach Anspruch 1, dadurch gekennzeichnet, daß das Sperrglied als am Gelenkteil (32) der Rückenlehne drehbar gelagerter Anschlagnocken (30) ausgebildet ist und mit einer Nockenverlängerung (40) oberhalb seines Lagerpunktes (31) an einem als Rolle (36) ausgebildeten Gewichtskörper anliegt, der auf einer am Gelenkteil (32) der Rückenlehne befestigten, nach unten geneigten Stütze (38) abrollbar und in Schlitzen (44) geführt angeordnet ist, um bei stehendem Fahrzeug eine der zur Rampenfläche (37) senkrechten Kraftkomponente proportionale Entriegelungskraft auf die Nockenverlängerung (40) zu bewirken, die bei Bremswirkung des Fahrzeuges von einer der Schwerkraft entgegenwirkenden, ein Sperrmoment verursachenden Trägheitskraft aufgehoben ist.

7. Trägheitssperreinrichtung nach Anspruch 1, dadurch gekennzeichnet, daß das Sperrglied (79) am Gelenkteil (32) der Rückenlehne drehbar gelagert ist und ein nach oben verlaufendes Kappengehäuse (83) zur Aufnahme eines in der Kappe drehbar herabhängenden Pendelgewichtes (80) aufweist, wobei der Schwerpunkt des Pendelgewichtes (80) so angeordnet ist, daß eine Öffnungskraft zur Entriegelung des Sperrgliedes (79) bei stehendem Fahrzeug ausgeübt wird, während bei Fahrzeugbremsung der Gewichtskörper in eine die Verriegelung des Sperrgliedes (79) bewirkende Richtung schwingt.

8. Trägheitssperreinrichtung nach Anspruch 7, dadurch gekennzeichnet, daß die Drehlagerstelle (81) des Pendelgewichtes (80) als geneigter Schlitz (82) ausgebildet ist, durch den das Pendelgewicht (80) bei stehendem Fahrzeug so angeordnet ist, daß eine maximale Öffnungsvorspannung auf das Sperrglied (79) ausgeübt wird, wobei der Schlitz eine Verlagerung des Drehmittelpunktes (81) des Pendelgewichtes (80) bei Fahrzeugbremsung in Fahrtrichtung zur Erzeugung eines Sperrmomentes erlaubt.

9. Trägheitssperreinrichtung nach Anspruch 1, dadurch gekennzeichnet, daß das am Gelenkteil der Rückenlehne drehbar gelagerte Sperrglied (87) einen umschlossenen, teilweise mit Flüssigkeit gefüllten Hohlraum (88) aufweist, dessen Schwerpunkt bei stehendem Fahrzeug das Sperrglied (87) in Entriegelungsstellung vorspannt, während der Hohlraum (88) so gestaltet ist, daß eine Verlagerung des Flüssigkeitsschwerpunktes bei Fahrzeugbremsung zur Erzeugung eines Sperrmomentes gegeben ist.

## Claims

1. An inertia latch for the backrest adjustment of vehicle seats, wherein a hinge element (10, 47) associated with the seat and a hinge element (12, 32, 36) associated with the backrest are interconnected via a pivot axis (14, 43, 48), and one hinge element has associated therewith a stop (25, 34, 70) against which a latch element (22, 30, 68, 79, 87) controlled by inertia forces and causing relative fixing of the hinge elements in case of strong inertia forces, can be caused to abut, characterized in that the latch element (22, 30, 68, 79, 87) is coupled with a separate weight body (16, 36, 71, 80) whose force of gravity acting on the latch element in a releasing sense can be compensated by an inertia force due to deceleration for obtaining a locked position of the latch element.

2. An inertia latch as claimed in the claim 1, characterized in that the latch element (22) and the weight body (16) are connected with a pivotally supported toggle joint (17, 21), said toggle joint being designed in such a manner that the moment of gravity release can be neutralized by the inertia moment resulting from vehicle deceleration.

3. An inertia latch as claimed in the claim 2, characterized in that the latch element is designed as cross pin (22) connected with one end of the toggle joint (17, 21), wherein vertical slots (23) in the spaced-apart side plates (15) of one hinge element (10) guide the movement of the cross pin (22) into engaged and disengaged position of the latch, and an indentation (24) of the other hinge element (12) mounted between the side plates (15) is provided for engagement with the cross pin, when the cross pin (22) is located at one end of the slots (23), while the cross pin (22) is released when at the other end of the slots (23).

4. An inertia latch as claimed in the claim 3, characterized in that the cross pin (22) and the weight body (16) are mounted inside the spaced-apart side plates (15) of the hinge element (10) and the pin (22) is positioned in locked engagement at the upper end of the slots (23).

5. An inertia latch as claimed in the claim 1, characterized in that the latch element designed as cross pin (68) is guided in slots (69) provided in the hinge element (63) associated with the backrest, wherein the cross pin (68) engages in a recess (70) of a pawl plate (49) adjustable for backrest adjustment, in order to prevent forward dumping of the backrest by means of a weight body (71) mounted on a support (72) secured to the hinge element (63) of the backrest and inclined downwardly in a rearward direction, and connected with the cross pin (68) through a tension member (73), a lever (74) being supported on the hinge element (63) associated with the backrest, which on the one hand controls the cross pin (68) and on the other hand a control surface (77) of the recess (70) in the pawl plate (49) for transferring the cross pin into locked position in response to the movement of the backrest into its position of use.

6. An inertia latch as claimed in the claim 1, characterized in that the latch element is designed as stop cam (30) rotatably supported on the hinge element (32) of the backrest, and with a cam extension (40) above its bearing point (31) abuts a weight body designed as roll (36) arranged to roll off a downwardly inclined support (38) mounted to the hinge element (32) of the backrest, and guided in slots (44), in order to effect — with vehicle standing — an unlocking force on the cam extension (40), proportional to the force component vertical to the slope surface (37), which is compensated by an inertia force counteracting the force of gravity, causing a locking moment upon decelerating action of the vehicle.

7. An inertia latch as claimed in the claim 1, characterized in that the latch element (79) is pivotally supported on the hinge element (32) of the backrest and has an upwardly extending cap housing (83) for accommodation of a pendulum weight (80) rotatingly suspended in the cap, the point of gravity of the pendulum weight (80) being provided such that — with standing vehicle — an opening force is applied to unlock the latch element (79), whereas during vehicle deceleration the weight body swings into a direction causing locking of the latch element (79).

8. An inertia latch as claimed in the claim 7, characterized in that the pivot bearing (81) of the pendulum weight (80) is designed as an inclined slot (82) by which the pendulum weight (80) — with standing vehicle — is arranged such that a maximum opening bias is exerted on the latch element (79), the slot permitting a shift of the central pivot point (81) of the pendulum weight (80) in case of vehicle deceleration in the direction of travel for producing a locking moment.

9. An inertia latch as claimed in the claim 1, characterized in that the latch element (87) pivotally supported on the hinge element of the backrest, is provided with an enclosed cavity (88) partly filled with liquid, whose point of gravity biasses the latch element (87) into unlocked position when the vehicle is standing, while the cavity (88) is designed such that a displacement of the liquid point of gravity is caused for producing a locking moment upon vehicle deceleration.

**Revendications**

1. Verrouillage d'inertie pour le dossier d'un siège de véhicule comportant une partie articulée (10, 47) appartenant au siège et une partie articulée (10, 47) appartenant au siège et une partie articulée (12, 32, 36) subordonnée au dossier assemblées par un axe de pivotement (14, 43, 48) et une butée (25, 34, 70) subordonnée à une partie articulée contre laquelle peut venir s'appliquer un élément de verrouillage (22, 30, 68, 79, 87) soumis à des forces inertielles, qui détermine la position réciproque des parties articulées lorsque sont engendrées d'importantes forces dues à la décélération, caractérisé par le fait que l'élément de verrouillage (22, 30, 68, 79, 87) est accouplé à un contrepoids distinct (16, 36, 71, 80) dont la force de gravitation s'exerçant, pour le libérer, sur l'élément de verrouillage, peut être annulée par une force inertielle inhérente à la décélération, plaçant ainsi l'élément en une position de verrouillage.

2. Verrouillage d'inertie selon revendication 1, caractérisé par le fait que l'élément de verrouillage (22) et le contrepoids (16) sont reliés par une articulation à genouillère mobile en rotation (17, 21), celle-ci étant constituée pour que le couple engendré par le déverrouillage par gravitation puisse être neutralisé par le moment inertiel résultant du freinage du véhicule.

3. Verrouillage d'inertie selon revendication 2, caractérisé par le fait que l'élément de verrouillage est conçu en tant que tourillon transversal (22) relié à une extrémité de l'articulation à genouillère (17, 21), des trous oblongs verticaux (23) pratiqués dans les plaques latérales (15) distantes l'une de l'autre d'une articulation (10) assurant le guidage du tourillon transversal (22) en position hors de prise ou de prise du verrouillage, et une échancrure (24) de l'autre articulation (12) disposée entre les plaques latérales (15) étant prévue pour offrir une prise au tourillon transversal (22) si celui-ci se trouve à l'extrémité du trou oblong (23), alors que le tourillon (22) est libéré lorsqu'il se trouve à l'extrémité opposée du trou oblong (23).

4. Verrouillage d'inertie selon revendication 3, caractérisé par le fait que le tourillon transversal (22) et le contrepoids (16) sont disposés à l'intérieur des plaques latérales (15) distantes l'une de l'autre de l'articulation (10) et que le tourillon (22) se trouve à l'extrémité supérieure du trou oblong (23) en prise pour assurer le verrouillage.

5. Verrouillage d'inertie selon revendication 1, caractérisé par le fait que le tourillon transversal (68) servant d'élément de verrouillage est guidé dans les trous oblongs (69) pratiqués dans l'articulation (63) du dossier, le tourillon (68) étant en prise dans un évidement (70) d'une plaque à cliquet (49) réglable suivant la position occupée par le dossier, afin d'éviter un basculement vers l'avant du dossier par le contrepoids (71) qui est logé dans une fixation (72) fixée à la partie articulée (63) du dossier et inclinée vers le bas et vers l'arrière d'une part, et est rendu solidaire du tourillon transversal (68) par un tirant (73) d'autre part, un levier (74) étant articulé dans la partie orientable (63) faisant partie du dossier, levier qui exerce d'une part une force sur le tourillon transversal (68) et d'autre part sur une rampe pilote (77) de l'évidement (70) pratiqué dans la plaque à cliquet (49) pour le transfert du tourillon transversal en position de verrouillage, suivant le mouvement du dossier en position d'utilisation.

6. Levier de verrouillage d'inertie selon revendication 1, caractérisé par le fait que l'élément de verrouillage est conçu en tant que came de butée (30) montée mobile en rotation dans la partie articulée (32) du dossier, qui vient s'appliquer contre un contrepoids ayant la forme d'un galet (36), par une partie prolongée (40) de la came, au-dessus de son point de pivotement (31), contrepoids qui est disposé roulant sur un appui (38) incliné vers le bas, fixé à la pièce articulée (32) du dossier et est guidé dans des trous oblongs (44) afin d'exercer sur le prolongement (40) de la came et à l'arrêt du véhicule une force de déverrouillage proportionnelle aux composantes des forces perpendiculaires à la face de guidage de la rampe (37), force qui est annulée par une force inertielle s'opposant à la force de gravitation, en engendrant un couple de verrouillage lors du freinage du véhicule.

7. Verrouillage d'inertie selon revendication 1, caractérisé par le fait que l'élément de verrouillage (79) est logé mobile en rotation dans la partie articulée (32) du dossier et qu'il présente un boîtier en forme de coiffe (83) dirigé vers le haut et destiné à recevoir un balancier (80) disposé suspendu et mobile dans le boîtier, le centre de gravité du balancier (80) étant disposé de manière que soit engendrée une force d'ouverture qui provoque le déverrouillage de l'élément de verrouillage (79) lorsque le véhicule est à l'arrêt, alors que, au freinage, le contrepoids oscille dans un sens qui provoque le verrouillage de l'élément (79).

8. Verrouillage d'inertie selon revendication 7, caractérisé par le fait que le point de pivotement (81) du balancier (80) est conçu en forme de lumière inclinée (82), dans laquelle le balancier (80) est disposé de manière que, à l'arrêt du véhicule, une précontrainte maximum d'ouverture s'exerce sur l'élément de verrouillage (79), le trou oblong permettant un déplacement du point de pivotement (81) du balancier (80), qui provoque un couple de verrouillage lors du freinage du véhicule sur sa trajectoire.

9. Verrouillage d'inertie selon revendication 1, caractérisé par le fait que l'élément de verrouillage (87) logé mobile en rotation dans la partie articulée du dossier présente une cavité fermée (88) remplie partiellement de liquide, cavité dont le centre de gravité soumet l'élément de verrouillage (87) à une contrainte en position de déverrouillage à véhicule arrêté, alors que cette même cavité (88) est conformée de manière qu'un déplacement du centre de gravité du liquide lors du freinage du véhicule engendre un couple de verrouillage.

# FIG. 1A

# FIG. 1

# FIG. 1B

0 059 963

FIG.2

FIG.5

FIG.3

FIG.4

FIG.4A